# EUROPÄISCHE PATENTANMELDUNG

(11) **EP 3 919 209 A1**
(43) Veröffentlichungstag der Anmeldung: **08.12.2021**
(21) Anmeldenummer: 20178279.4
(22) Anmeldetag: 04.06.2020
(51) Int. Cl.: B23B 51/04, B28D 1/04, B23D 59/02

(54) **KERNBOHRGERÄT OHNE GETRIEBE, BEI DEM EINE BOHRKRONE ÜBER EINE MOTORWELLE VON EINEM MOTOR ANGETRIEBEN WIRD**

(71) Anmelder: Hilti Aktiengesellschaft, 9494 Schaan (LI)
(72) Erfinder: Holzmeier, Georg, 86748 Marktoffingen (DE); Koslowski, Oliver, 86932 Pürgen (DE)
(74) Vertreter: Hilti Aktiengesellschaft Corporate Intellectual Property

(57) **Zusammenfassung**

Die vorliegende Erfindung betrifft ein Kernbohrgerät, das eine Bohrkrone als Werkzeug umfasst. Das Kernbohrgerät ist dadurch gekennzeichnet, dass die Bohrkrone unmittelbar über eine Motorwelle von einem Motor angetrieben werden kann, wobei das Kernbohrgerät kein Untersetzungsgetriebe umfasst. Die Erfindung ist mit den Vorteilen verbunden, dass das Kernbohrgerät besonders einfach und leicht ausgestaltet ist. Darüber hinaus werden unerwünschte Beschädigungen an dem zu bearbeitenden Untergrund durch den Verzicht auf eine Schlagfunktion vermieden. Ferner wird durch den Verzicht auf eine Schlagfunktion auch kein oder weniger Körperschall in den Untergrund oder in ein Gebäude, in dem mit dem vorgeschlagenen Kernbohrgerät gearbeitet wird, eingeleitet. So wird ein besonders leises Bohren mit dem Kernbohrgerät ermöglicht bzw. die Erzeugung der Bohrlöcher mit dem vorgeschlagenen Kernbohrgerät erfolgt besonders geräusch- oder körperschallarm.

## Beschreibung

Die vorliegende Erfindung betrifft ein Kernbohrgerät, das eine Bohrkrone als Werkzeug umfasst. Das Kernbohrgerät ist dadurch gekennzeichnet, dass die Bohrkrone unmittelbar über eine Motorwelle von einem Motor antreibbar ist, wobei das Kernbohrgerät kein Untersetzungsgetriebe umfasst. Die Erfindung ist mit den Vorteilen verbunden, dass es besonders einfach und leicht ausgestaltet ist. Darüber hinaus werden unerwünschte Beschädigungen an dem zu bearbeitenden Untergrund durch den Verzicht auf eine Schlagfunktion vermieden. Ferner wird durch den Verzicht auf die Schlagfunktion auch kein oder weniger Körperschall in den Untergrund oder in ein Gebäude, in dem mit dem vorgeschlagenen Kernbohrgerät gearbeitet wird, eingeleitet. So wird ein besonders leises Bohren mit dem vorgeschlagenen Kernbohrgerät ermöglicht bzw. die Erzeugung der Bohrlöcher mit dem vorgeschlagenen Kernbohrgerät erfolgt besonders geräusch- bzw. körperschallarm.

### Hintergrund der Erfindung:

In konventionellen Bohrgeräten, die aus dem Stand der Technik bekannt sind, wird üblicherweise eine Schlagfunktion verwendet, um durch ein kombiniertes Schlagbohren in harten mineralischen Untergründen einen Bohrfortschritt zu erreichen. Beim Betrieb eines solchen konventionellen Schlagbohrgeräts kann es zu unerwünschten Beschädigungen des zu bearbeitenden Untergrunds kommen. Beispielsweise können die Sicht- oder Oberflächen des Untergrunds durch Absplittern beschädigt werden. Vor allem spröde Untergründe, wie Natursteine, können von solchen Beschädigungen betroffen sein.

Darüber hinaus kann durch die Verwendung einer Schlagfunktion bei konventionellen Schlagbohrgeräten Körperschall in den Untergrund eingebracht werden. Durch die Schlagfunktion kann ein hoher Körperschallpegel erzeugt werden, der sich beispielsweise in weiten Teilen eines Gebäudes, in dem Bohrarbeiten durchgeführt werden, ausbreiten kann. Wenn die Bohrarbeiten in einem bewohnten Gebäude durchgeführt werden, kann dieser Körperschall von den Bewohnern als unerwünschte Belastung empfunden werden. Darüber hinaus gibt es Anwendungsfälle, in denen das Einbringen von Körperschall durch Schlagbohrgeräte verboten ist. In solchen Gebäuden, wie zum Beispiel Krankenhäusern, dürfen konventionelle Schlagbohrgeräte daher nicht verwendet werden.

Die Aufgabe, die der vorliegenden Erfindung zugrunde liegt, besteht demnach darin, die vorstehend beschriebenen Nachteile und Mängel des Standes der Technik zu überwinden und ein Kernbohrgerät bereitzustellen, das besonders einfach, leicht und kompakt ausgebildet ist. Darüber hinaus sollen mit dem bereitzustellenden Kernbohrgerät besonders hohe Drehzahlen am Motor und/oder an der Bohrkrone des Geräts erreicht werden können. Des Weiteren soll die Einbringung von Körperschall in den zu bearbeitenden Untergrund vermieden oder zumindest reduziert werden, so dass mit der bereitzustellenden Erfindung ein besonders leises Bohren ermöglicht wird. Ein weiteres Anliegen der Erfindung besteht darin, unerwünschte Beschädigungen an dem zu bearbeitenden Untergrund zu vermeiden.

Die Aufgabe wird gelöst durch den Gegenstand des unabhängigen Anspruchs 1. Vorteilhafte Ausführungsformen zu dem Gegenstand des unabhängigen Anspruchs finden sich in den abhängigen Ansprüchen.

### Beschreibung der Erfindung

Erfindungsgemäß ist ein Kernbohrgerät umfassend eine Bohrkrone als Werkzeug vorgesehen. Das Kernbohrgerät ist dadurch gekennzeichnet, dass die Bohrkrone unmittelbar über eine Motorwelle von einem Motor antreibbar ist, wobei das Kernbohrgerät kein Untersetzungsgetriebe umfasst. Mit anderen Worten ist es im Kontext der vorliegenden Erfindung vorgesehen, dass die Bohrkrone direkt über die Motorwelle des Motors des Kernbohrgeräts angetrieben werden kann.

Ein Grundgedanke, der der Erfindung zugrunde liegt, besteht darin, dass im Kontext des vorgeschlagenen Kernbohrgeräts auf die Vorsehung eines Getriebes verzichtet werden kann. Dieser Vorteil wird vorzugsweise dadurch erreicht, dass die Bohrkrone direkt über die Motorwelle angetrieben wird. Die Motorwelle stellt vorzugsweise das Bindeglied zwischen Motor und Werkzeug des vorgeschlagenen Kernbohrgeräts dar. Mit anderen Worten kann die Bohrkrone als Werkzeug des Kernbohrgeräts unter Verwendung der Motorwelle angetrieben werden, indem eine Drehbewegung des Motors mit der Motorwelle auf die Bohrkrone übertragen wird.

Es ist im Sinne der Erfindung bevorzugt, dass es sich bei dem Kernbohrgerät um ein Diamantkernbohrgerät handelt. Ein Diamantbohrgerät weist vorzugsweise eine Bohrkrone auf, die mit (künstlichen) Diamanten oder Diamantsplittern besetzt sein kann, um die Bohrleistung gegenüber einer diamantlosen Bohrkrone zu erhöhen. Diamantbohrgeräte mit Diamantbohrkronen werden insbesondere zur Bearbeitung von besonders harten Untergründen verwendet. Ein besonders wichtiges Anwendungsgebiet des Diamantbohrens ist das Kernbohren, bei dem ein zylinderförmiger Bohrkern aus dem zu bearbeitenden Untergrund herausgearbeitet werden soll. Die entstehenden Bohrlöcher, die auf diese Weise erzeugt werden, können beispielsweise für die Verlegung von Kabelleitungen oder von Rohren verwendet werden. Ein Anwendungsgebiet für die vorliegende Erfindung ist das Bohren von mineralischen Untergründen, wie zum Beispiel Fliesen. Es hat sich gezeigt, dass auch bekanntermaßen harte Untergründe, wie Naturstein oder armierter Beton, mit einem vorgeschlagenen Bohrgerät besonders gut bearbeitet werden können. Dies wird insbesondere durch überraschend hohe Drehzahlen erreicht, die mit dem vorgeschlagenen Kernbohrgerät erzielt werden können.

Tests haben gezeigt, dass durch den unmittelbaren bzw. direkten Antrieb der Bohrkrone durch die Motorwelle überraschend hohe Drehzahlen an der Bohrkrone erreicht werden können.

Auf diese Weise ist das vorgeschlagene Kernbohrgerät ohne Getriebe besonders geeignet für die Anforderungen des Diamantbohrens. Die vorgeschlagene Erfindung eignet sich besonders für die Anwendung in kleinen Diamantbohrgeräten, die häufig mit Bohrkronen mit relativ geringen Durchmessers ausgestattet sind. Beispielsweise kann der Durchmesser der Bohrkrone in einem Bereich von kleiner als 40 mm liegen, bevorzugt in einem Bereich kleiner als 30 mm.

Solche kleinen Bohrkronen erfordern hohe Motor- und/oder Werkzeugdrehzahlen, um einen gewünschten Bohrfortschritt zu erreichen. Tests haben gezeigt, dass diese hohen Motor- und/oder Werkzeugdrehzahlen von dem vorgeschlagenen Kernbohrgerät problemlos bereitgestellt werden können. Dies wird insbesondere durch die Weglassung des Getriebes und den direkten Antrieb der Bohrkrone mit der Motorwelle erreicht. Die hohen Drehzahlen am Motor und/oder an der Bohrkrone ermöglichen darüber hinaus, dass mit dem vorgeschlagenen Krenbohrgerät ein besonders schneller bzw. großer Bohrfortschritt erreicht werden kann. Dadurch kann vorteilhafterweise die Effizienz beim Kernbohren erhöht werden. Mit anderen Worten kann eine höhere Anzahl von Bohrlöchern pro Zeiteinheit erzeugt werden oder die Zeit, die zur Erzeugung einer vorgegebenen Anzahl von Bohrlöchern benötigt wird, erheblich reduziert werden.

Darüber hinaus ermöglicht die Erfindung, dass das Kernbohrgerät besonders kompakt und leicht ausgebildet sein kann. Ferner können die Herstellungskosten für das Gerät geringgehalten werden. Dieser Vorteil wird insbesondere durch den Verzicht auf das Untersetzungsgetriebe erreicht.

Ein weiterer wichtiger Vorteil, der mit der Erfindung verbunden ist, besteht darin, dass mit dem vorgeschlagenen Kernbohrgerät auf die Verwendung einer Schlagfunktion bei der Erzeugung der Bohrlöcher verzichtet werden kann. Eine solche Schlagfunktion wird bei konventionellen Schlagbohrgeräten und/oder Schlagbohrhämmern verwendet, um den Bohrfortschritt zu verbessern. Durch den Verzicht auf ein Getriebe und den direkten Antrieb der Bohrkrone durch die Motorwelle können im Kontext der vorliegenden Erfindung so hohe Drehzahlen erreicht werden, dass vorteilhafterweise auf die Verwendung einer Schlagfunktion verzichtet werden kann. Tests haben gezeigt, dass mit dem vorgeschlagenen Kernbohrgerät trotz dieses Verzichts auf die Schlagfunktion und trotz des Verzichts auf die Vorsehung eines Untersetzungsgetriebes überraschenderweise zumindest vergleichbare Bohrfortschritte im Vergleich zu konventionellen Schlagbohrgeräten erzielt werden können. Dies gilt insbesondere auch für harte Untergründe, bei denen die Fachwelt bisher davon ausgegangen war, dass zur Erzeugung von Bohrlöchern eine Schlagfunktion an der Werkzeugmaschine notwendigerweise erforderlich ist. Insofern wendet sich die Erfindung durch das Weglassen des Getriebes und der Schlagfunktion gerade vom Stand der Technik ab und überwindet darüber hinaus auch ein bisher bestehendes Vorurteil der Fachwelt.

Der Verzicht auf die Schlagfunktion führt ferner dazu, dass im Wesentlichen kein oder zumindest weniger Körperschall in den zu bearbeitenden Untergrund eingebracht wird als mit konventionellen Schlagbohrgeräten, die aus dem Stand der Technik bekannt sind. Dies ist vor allem in solchen Anwendungsfällen von Vorteil, in denen das Einbringen von Körperschall verboten oder zumindest unerwünscht ist. Beispielsweise kann bei Renovierungsarbeiten in Bestandsbauten, zum Beispiel in bewohnten Altbauten, das Bohren mit Schlagfunktion zu einer erheblichen Belastung für die Bewohner des Gebäudes führen. Es ist bekannt, dass sich Körperschall rasch in weiten Teilen eines betroffenen Gebäudes ausbreiten kann, so dass es eine erhebliche Verbesserung darstellt, wenn das Einbringen bzw. die Erzeugung von Körperschall schlichtweg unterbleibt, so wie im es Kontext der vorliegenden Erfindung der Fall ist. Ferner kann durch das Weglassen der Schlagfunktion das Anwendungsspektrum des vorgeschlagenen Kernbohrgeräts vergrößert werden. Denn das vorgeschlagene Kernbohrgerät kann beispielsweise auch auf solchen Baustellen eingesetzt werden, auf denen die Erzeugung von Körperschall verboten ist. Dies gilt beispielsweise in schallsensitiven Bereichen, wie in Krankenhäusern.

Die Schlagfunktion, die insbesondere in konventionellen Schlagbohrgeräten und/oder Schlagbohrhämmem zur Bohrlocherzeugung verwendet wird, kann unerwünschterweise zu Beschädigungen des Untergrunds führen. Solche Beschädigungen können beispielsweise an den Ober- oder Sichtflächen von spröden Untergründen auftreten, wenn kleine Stücke des Untergrunds während des Betriebs eines konventionellen Schlagbohrgeräts absplittern. Tests haben gezeigt, dass überraschenderweise auch solche Beschädigungen durch den Verzicht auf die Schlagfunktion im Kontext der vorliegenden Erfindung vermieden bzw. zumindest reduziert werden können.

Es ist im Sinne der Erfindung bevorzugt, dass die Motorwelle des Kernbohrgeräts als Hohlwelle ausgebildet ist. Wenn die Rotorwelle des Motors des vorgeschlagenen Kernbohrgerät durch eine Hohlwelle realisiert wird, kann vorteilhafterweise stirnseitig durch die Motorwelle ein Fluid zum Kühlen und/oder Schmieren der Bohrkrone geführt werden. Bei diesem Kühlfluid kann es sich vorzugsweise um Wasser handeln. Es kann im Sinne der Erfindung allerdings auch bevorzugt sein, dass dem Kühlwasser Zusätze beigemischt sind, die die Wirkungen des Kühlwassers verbessern oder sein Funktionsspektrum verbreitern. Das Merkmal, wonach die Motorwelle als Hohlwelle ausgebildet ist, bedeutet im Sinne der Erfindung bevorzugt, dass die Motorwelle einen hohlen Innenraum umfasst, durch den ein Kühlfluid geleitet werden kann. Dieser Innenraum kann an der Spitze der Bohrkrone und an deren Ende Öffnungen aufweisen, so dass das Kühlwasser in das Bohrloch gelangen kann.

Es kann aber alternativ auch bevorzugt sein, dass der Innenraum im Bereich der Spitze der Bohrkrone geschlossen ist und das Kühlfluid in der vorzugsweise hohlen Motorwelle in einem geschlossenen Kühlkreislauf geführt wird. Dies kann beispielsweise dadurch erreicht werden, dass ein Spülkopf verwendet wird, der dazu eingerichtet ist, das Kühlfluid aus der Motorwelle abzugreifen, wodurch das Kühlfluid insbesondere nicht weiter in die Bohrkrone geleitet wird.

Dadurch kann das Kühlwasser aus einem Motorbereich des vorgeschlagenen Kernbohrgeräts in den Arbeitsbereich des Kernbohrgeräts geleitet werden. Vorzugsweise ist die bevorzugt hohl ausgebildete Rotorwelle dazu eingerichtet, mittels dem Kühlwasser Wärme aus dem Bereich der Motorwelle bzw. der Bohrkrone abzuführen und die Komponenten des Kernbohrgeräts auf diese Weise besonders effektiv zu kühlen. Ein weiterer Vorteil der vorzugsweise hohl ausgebildeten Motorwelle besteht darin, dass die Bohrkrone mit dem Kühlwasser auch geschmiert werden kann. Ferner kann mit der vorliegenden Erfindung das Gewicht des Kernbohrgeräts mit einer vorzugsweise hohl ausgebildeten Motorwelle im Vergleich zu Kernbohrgeräten mit massiven Motorwellen verringert werden.

Es ist im Sinne der Erfindung bevorzugt, dass das Kernbohrgerät zur Abdichtung der Motorwelle eine Gleitringdichtung umfasst. Es ist im Sinne der Erfindung bevorzugt, dass die Gleitringdichtung eine Axialdichtung darstellt. Sie kann vorzugsweise in einem hinteren Bereich der Motorwelle angeordnet vorliegen. Es ist im Sinne der Erfindung bevorzugt, dass die Gleitringdichtung insbesondere dazu eingerichtet ist, den nicht-drehenden Teil der Motorwelle gegenüber dem drehenden Teil der Motorwelle abzudichten. Vorzuweise ist der nicht-drehende Teil der Motorwelle derjenige Bereich der Motorwelle, in dem das Kühlfluid eingeleitet wird. Es ist im Sinne der Erfindung bevorzugt, dass die Gleitringdichtung stirnseitig an der Motorwelle angeordnet vorliegt.

Bei der Gleitringdichtung kann es sich vorzugsweise um eine axial ausgebildete Gleitringdichtung handeln. Die axiale Ausbildung der Gleitringdichtung bedeutet im Sinne der Erfindung bevorzugt, dass die Gleitringdichtung beispielsweise zwei Stirnflächen aufweisen kann, die gegeneinander abgedichtet werden. Dabei ist es bevorzugt, dass es sich bei der einen Stirnfläche um eine drehende Fläche handelt bzw. dass diese Stirnfläche an einem drehenden Objekt angeordnet vorliegt, während sich die andere Stirnfläche nicht dreht bzw. an einem nicht-drehenden Objekt angeordnet vorliegt.

Es hat sich herausgestellt, dass eine vorzugsweise axial ausgebildete Gleitringdichtung besonders gut geeignet ist, die hohen Drehzahlen von Motor und/oder Bohrkrone auszuhalten, die bei Betrieb des vorgeschlagenen Kernbohrgeräts auftreten können. Insbesondere hat sich gezeigt, dass die vorgeschlagenen Gleitringdichtungen besser für die Verwendung mit hohen Motor- und/oder Werkzeugdrehzahlen geeignet sind als Wellendichtringe, die häufig in konventionellen Schlagbohrgeräten verwendet werden. Dieser Vorteil wird insbesondere dadurch erreicht, dass Gleitringdichtungen lediglich auf die durch das Kühlwasser gewährleistete Kühlung und/oder Schmierung angewiesen sind. Ferner hat sich gezeigt, dass Gleitringdichtungen beständiger sind gegenüber etwaigen abrasiven Bestandteilen des Bohrwassers als Wellendichtringe. Insofern kann die Verwendung von Gleitringdichtungen die Lebenszeit eines solchen Kernbohrgeräts verlängern bzw. die Zeitspanne zwischen zwei Wartungsmaßnahmen verkürzen.

Es ist im Sinne der Erfindung bevorzugt, das Kernbohrgerät eine Pumpe aufweist, die mit der Motorwelle antreibbar ist. Beispielsweise kann die Pumpe, die mit der Rotorwelle angetrieben werden kann, als Axialpumpe ausgebildet sein. Vorzugsweise ist die Pumpe dazu eingerichtet, eine Flüssigkeit, beispielsweise eine Kühlflüssigkeit, mit Hilfe einer Drehbewegung zu fördern. Diese Förderung erfolgt vorzugsweise axial. Dies bedeutet im Sinne der Erfindung bevorzugt, dass die Förderung der Flüssigkeit im Wesentlichen parallel zu einer Welle der Pumpe erfolgt. Vorzugsweise fungiert die Pumpe, wenn sie als Axialpumpe ausgebildet ist, innerhalb des vorgeschlagenen Kernbohrgeräts als Strömungspumpe.

Vorzugsweise kann die Pumpe einen Propeller mit Schaufeln umfassen, wobei Außenseiten der Schaufeln an einer Innenwandung der Motorwelle befestigt vorliegen. Dieses Merkmal der Erfindung ist mit dem Vorteil der Funktionsintegration verbunden. Die Befestigung kann vorteilhafterweise sehr flexibel ausgeführt werden, beispielsweise durch Kleben, Einfassen oder Einpressen, ohne darauf beschränkt zu sein. Vorzugsweise kann die Pumpe einen Ringpropeller als separate Komponente umfassen. Der Ringpropeller kann beispielsweise in einer Hohlwelle eingepresst vorliegen. Vorzugsweise erstreckt sich der Ringpropeller über seinen Außendurchmesser.

Es ist im Sinne der Erfindung bevorzugt, dass die Pumpe einen Propeller umfasst, der sich in einem Innenraum der vorzugsweise hohlen Motorwelle befindet. Es ist im Sinne der Erfindung ganz besonders bevorzugt, dass der Propeller Schaufeln und/oder Flügel umfasst, deren Außenseiten an einer Innenwandung der bevorzugt hohlen Motorwelle befestigt vorliegen können. Diese Anordnung bzw. Befestigung der Schaufeln ermöglicht es vorteilhafterweise, dass das für den Betrieb des Kernbohrgeräts erforderliche Kühlwasser ohne eine zusätzliche Pumpe aus einem Wasserbehälter angesaugt und zur Spitze der Bohrkrone gefördert werden kann. Der Wasserbehälter kann in einer bevorzugten Ausgestaltung der Erfindung an dem Bohrgerät befestigt vorliegen. Dadurch kann das Bohrgerät aber unhandlich werden. Es kann daher auch bevorzugt sein, dass es sich um einen externen Wasserbehälter handelt, der beispielsweise Bestandteil eines Nass-Saugers oder eines Wasser-Management-Systems sein, wie sie im Bereich des Baugewerbes bekannt sind.

Vorzugsweise umfasst das Kernbohrgerät ein Wasserregulierungsventil zur Einstellung einer Menge an Kühlfluid zur Kühlung der Bohrkrone des Kernbohrgeräts. Es ist im Sinne der Erfindung bevorzugt, dass das Wasserregulierungsventil in Strömungsrichtung des Kühlfluids vor der Gleitringdichtung angeordnet vorliegt. Diese Anordnung ist besonders vorteilhaft, weil in Strömungsrichtung hinter der Gleitringdichtung vorzugsweise lediglich rotierende Bestandteile des vorgeschlagenen Kernbohrgeräts angeordnet vorliegen, die die Anbringung eines regulierbaren Ventils deutlich erschweren. Es ist im Sinne der Erfindung bevorzugt, dass ein Wassereinlass in Richtung des Motors des Kernbohrgeräts erfolgt. Vorzugsweise erfolgt die Zuführung der Flüssigkeit an einem Eingang des Ventils. Ein Wasserauslass erfolgt vorzugsweise hinter dem Ventil, wobei das Ventil mit der Gleitringdichtung verbunden vorliegen kann. Dadurch erfolgt der Wasserauslass insbesondere in einem Eingangsbereich der Motorhohlwelle. Bei dem Wasserregulierungsventil kann es sich zum Beispiel um einen Kugelhahn handeln.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:

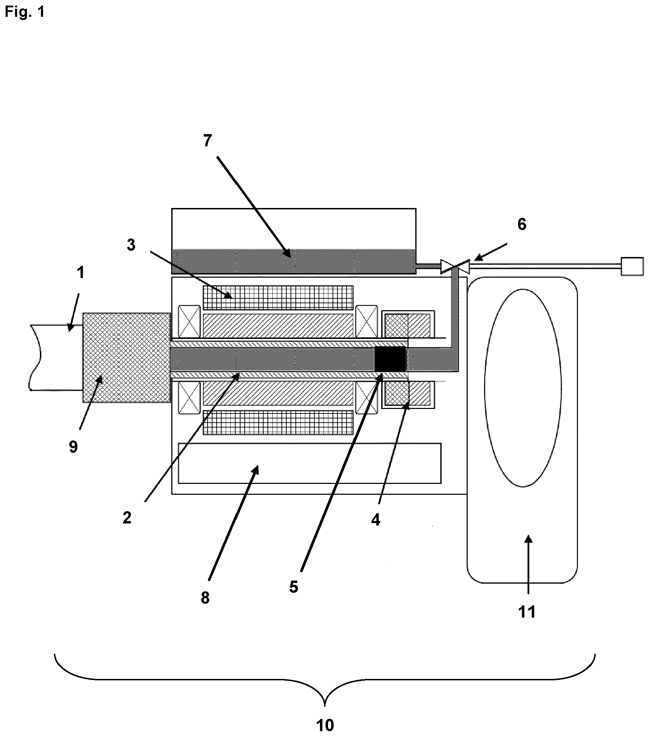

- Fig. 1: schematische Darstellung einer bevorzugten Ausführungsform der Erfindung

### Ausführungsbeispiele und Figurenbeschreibung:

Figur 1 zeigt eine schematische Darstellung einer bevorzugten Ausgestaltung des vorgeschlagenen Kernbohrgeräts (10). Das Kernbohrgerät (10) weist eine Bohrkrone (1) auf, die über eine Werkzeugaufnahme (9) mit dem Kernbohrgerät (10) verbunden werden kann. Erfindungsgemäß ist vorgesehen, dass die Bohrkrone (1) unmittelbar über eine Motorwelle (2) von einem Motor (3) angetrieben wird, wobei ein wesentlicher Vorteil des vorgeschlagenen Kernbohrgeräts (10) darin besteht, dass das Kernbohrgerät (10) ohne Untersetzungsgetriebe auskommt. Die Motorwelle (2) ist vorzugsweise als Hohlwelle ausgeführt. Die Motorwelle (2) kann ferner einen Rotor umfassen, der zusammen mit einem Stator den Motor (3) des Kernbohrgeräts (10) bildet. Der Rotor liegt vorzugsweise an der Außenwand der bevorzugt zylindrisch ausgebildeten Motorwelle (2) vor, so dass er mit dem Stator des Motors (3) zusammenwirken kann, um die Bohrkrone (1) anzutreiben. Insbesondere wenn die Motorwelle (2) als Hohlwelle ausgebildet ist, kann eine Kühlflüssigkeit (7) bzw. ein Kühlfluid (7) durch die Welle (2) in Richtung der Bohrkrone (1) geführt werden.

Die Kühlflüssigkeit (7) kann in einem Wassertank aufbewahrt werden, der einen optionalen Bestandteil des Kernbohrgeräts (10) darstellt. Das Vorsehen eines Wassertanks an dem vorgeschlagenen Kernbohrgerät (10) kann insbesondere dann vorteilhaft sein, wenn auf der Baustelle, auf der mit dem Kernbohrgerät (10) gearbeitet wird, kein Wasseranschluss für die kontinuierliche Zuführung von Kühlflüssigkeit (7) vorhanden ist. In Fig. 1 wird der optionale Wassertank als Rechteck ganz oben in der Abbildung dargestellt. Das Kühlfluid (7), bei dem es sich insbesondere um Wasser handeln kann, kann unter Verwendung eines Wasserregulierungsventils (6) in Richtung der Motorwelle (2) und der Bohrkrone (1) geleitet werden. Die Bewegungsrichtung des Kühlfluids (7) vom Wassertank in Richtung der Motorwelle (2) und der Bohrkrone (1) wird dabei im Sinne der Erfindung als «Strömungsrichtung» der Kühlflüssigkeit (7) bezeichnet. Bei dem Wasserregulierungsventil (6) kann es sich insbesondere um ein Flüssigkeitsventil mit manueller Wasserregulierungsmöglichkeit handeln. Mit anderen Worten kann das Ventil (6) manuell betätigt werden. Alternativ zu dem Wassertank kann das Kernbohrgerät (10) auch einen Wasseranschluss aufweisen. Ein solcher Wasseranschluss wird durch das Rechteck oben rechts in der Abbildung symbolisiert. Durch das Vorsehen eines Wasseranschlusses kann dem Kernbohrgerät (10) vorteilhafterweise kontinuierlich Wasser zum Kühlen der Bohrkrone (1) im Betrieb zugeführt werden.

Vor Eintritt des Kühlfluids (7) in die vorzugsweise hohl ausgebildete Motorwelle (2) passiert das Kühlwasser (7) die Pumpe (5) des Kernbohrgeräts (10). Die Pumpe (5) kann bevorzugt als Axialpumpe ausgeführt sein. Sie ist dazu eingerichtet, das Kühlfluid (7) aus dem Wassertank in Richtung der Bohrkrone (1) zu pumpen. Im Bereich der Pumpe (5) ist innerhalb des Kernbohrgeräts (10) vorzugsweise auch eine Gleitringdichtung (4) angeordnet. Bei der Gleitringdichtung (4) kann es sich bevorzugt um eine axiale Gleitringdichtung handeln. Die Gleitringdichtung (4) weist vorzugsweise einen feststehenden Gleitdichtring auf, der mit einem mitdrehenden Gegenring auf der Motorwelle (2) zusammenwirkt, um die Dichtwirkung zu erzielen.

Ferner kann das Kernbohrgerät (10) eine Elektronik (8) umfassen. Die Elektronik (8) soll durch das längliche Rechteck im unteren Bereich des Kernbohrgeräts (10) symbolisiert werden. Darüber hinaus kann das Kernbohrgerät (10) einen Griff (11) umfassen. Der Griff (11) kann insbesondere als Handgriff (11) ausgebildet sein und einen Durchgriffsraum für eine Hand des Nutzers aufweisen. Beispielsweise kann der Griff (11) den Hauptschalter für das Kernbohrgerät (10) aufweisen.

### Bezugszeichenliste

- 1: Bohrkrone
- 2: Motorwelle, insbesondere umfassend einen Rotor
- 3: Motor, insbesondere Stator
- 4: Gleitringdichtung
- 5: Pumpe
- 6: Wasserregulierungsventil
- 7: Kühlfluid bzw. Wassertank dafür
- 8: Elektronik
- 9: Werkzeugaufnahme
- 10: Kernbohrgerät
- 11: Handgriff des Kernbohrgeräts

## Patentansprüche

1. Kernbohrgerät (10) umfassend eine Bohrkrone (1) als Werkzeug,
**dadurch gekennzeichnet, dass**
die Bohrkrone (1) unmittelbar über eine Motorwelle (2) von einem Motor (3) antreibbar ist, wobei das Kernbohrgerät (10) kein Untersetzungsgetriebe umfasst.

2. Kernbohrgerät (10) nach Anspruch 1
**dadurch gekennzeichnet, dass**
das Kernbohrgerät zur Abdichtung der Motorwelle (2) eine Gleitringdichtung (4) umfasst.

3. Kernbohrgerät (10) nach Anspruch 2
**dadurch gekennzeichnet, dass**
die Gleitringdichtung (4) einen feststehenden Gleitdichtring aufweist, der mit einem mitdrehenden Gegenring auf der Motorwelle (2) zusammenwirkt, um die Dichtwirkung zu erzielen.

4. Kernbohrgerät (10) nach einem der vorhergehenden Ansprüche
**dadurch gekennzeichnet, dass**
die Motorwelle (2) als Hohlwelle ausgebildet ist.

5. Kernbohrgerät (10) nach einem der vorhergehenden Ansprüche
**dadurch gekennzeichnet, dass**
das Kernbohrgerät (10) eine Pumpe (5) aufweist, die mit der Motorwelle (2) antreibbar ist.

6. Kernbohrgerät (10) nach Anspruch 5
**dadurch gekennzeichnet, dass**
die Pumpe (5) einen Propeller mit Schaufeln umfasst, wobei Außenseiten der Schaufeln an einer Innenwandung der Motorwelle (2) befestigt vorliegen.

7. Kernbohrgerät (10) nach einem der vorhergehenden Ansprüche
**dadurch gekennzeichnet, dass**
das Kernbohrgerät (10) ein Wasserregulierungsventil (6) umfasst zur Einstellung einer Menge an Kühlfluid (7) zur Kühlung der Bohrkrone (1) des Kernbohrgeräts (10).

8. Kernbohrgerät (10) nach Anspruch 7
**dadurch gekennzeichnet, dass**
das Wasserregulierungsventil (6) in Strömungsrichtung des Kühlfluids (7) vor der Gleitringdichtung (4) angeordnet vorliegt.

9. Kernbohrgerät (10) nach einem der vorhergehenden Ansprüche
**dadurch gekennzeichnet, dass**
das Kernbohrgerät (10) ohne Schlagfunktion bereitgestellt wird.
